# EUROPÄISCHE PATENTSCHRIFT

(11) **EP 0 800 854 B1**
(45) Veröffentlichungstag und Bekanntmachung des Hinweises auf die Patenterteilung: **05.12.2001**
(21) Anmeldenummer: 97109512.0
(22) Anmeldetag: 19.08.1996
(51) Int. Cl.: B01D 53/80, B01D 53/50

(54) **Vorrichtung zur Reinigung von Rauchgas**
Device for cleaning smoke
Dispositif pour la purification de gaz de fumée

(30) Priorität: 18.08.1995 DE 19530497
(43) Veröffentlichungstag der Anmeldung: 15.10.1997
(62) Teilanmeldung aus: 96934359.9
(73) Patentinhaber: FHW-Brenntechnik GmbH, D-84494 Neumarkt-Sankt Veit (DE)
(72) Erfinder: Weichs, Hermann, 84494 Neumarkt-Sankt Veit (DE); Friedl, Andreas, 84489 Burghausen (DE)
(74) Vertreter: Eder, Thomas, Dr.-Ing.

(56) Entgegenhaltungen:
- EP-A- 0 342 559
- WO-A-94/07591
- DE-A- 2 716 329
- FR-A- 2 205 833
- US-A- 3 976 747
- US-A- 4 542 000

## Beschreibung

Die Erfindung betrifft eine Vorrichtung zur Reinigung von Rauchgas mit den Merkmalen des Oberbegriffs des Patentanspruchs 1.

Zur Rauchgasreinigung, beispielsweise zur Reinigung von Abgasen aus Feuerungsanlagen, finden derzeit im Wesentlichen Nass-Verfahren, Halbtrocken-Verfahren und Trocken-Verfahren Anwendung. Dabei weisen Nass-Verfahren und Halbtrocken-Verfahren einen in aller Regel höheren Reinigungswirkungsgrad auf als Trocken-Verfahren. Nass- oder Halbtrocken-Verfahren bedingen jedoch einen höheren Aufwand bei der Zufuhr, Abfuhr und der Wiederaufbereitung des zur Reinigung der Rohgase eingesetzten Ad-/Absorbens. Zudem entstehen in dem Behälter, in welchem das zugegebene Ad-/Absorbens die Absorption oder Adsorption der Schadstoffe bewirkt, extrem aggressive Säuren, die die Behälterinnenwandung bzw. darin befindliche Einrichtungen angreifen. Die mit Salzen aus dem Wäscher abgestoßenen Wässer müssen in einer Abwasseraufbereitungsanlage behandelt werden, was mit einem erheblichen Aufwand verbunden ist, der sich insbesondere bei kleineren Rauchgas-Reinigungsanlagen auswirkt.

Es wurden daher verschiedene Methoden zur Verbesserung des Reinigungswirkungsgrades von trockenen Rauchgasreinigungsverfahren vorgeschlagen. Beispielsweise ist in der EP-A-0 104 335 offenbart, dass die Reaktion zwischen den im Rohgas enthaltenen Schadstoffen und dem Ad-/Absorbens verbessert werden kann, wenn zusätzlich Wasser zugegeben wird. Dies geschieht in der Weise, dass in einer ersten Stufe trockenes, pulverförmiges Reaktionsmittel eingeblasen und in einer zweiten Stufe reines Wasser oder eine wässrige Lösung oder Suspension eines Reaktionsmittels eingedüst wird. Durch das in der zweiten Stufe zugesetzte Wasser kann eine Reaktivierung von Partikeln des Reaktionsmittels erreicht werden. Durch die Zugabe von Wasser kann somit das Reaktionsmittel besser ausgenutzt werden.

Nachteilig hierbei ist, dass die zugesetzte Wassermenge so gering gehalten werden muss, dass auch bei relativ niedriger Anfangstemperatur des Abgases der Taupunkt nicht unterschritten wird. Wird dies nicht beachtet, so kann es durch die sich bildenden aggressiven wässrigen Säuren zu einer Beschädigung der Anlage kommen.

Es ist des weiteren, beispielsweise aus der EP-A-0 029 564, bekannt, dass durch eine intensive Vermischung des Rohgases mit dem zugesetzten trockenen Ad-/Absorbens eine Erhöhung der Relativgeschwindigkeit zwischen dem Gas und den Ad-/Absorbenspartikeln und damit eine Verbesserung der Reaktionsgeschwindigkeit bzw. des Reinigungswirkungsgrades erzielbar ist. Hierzu wird in der EP-A-0 029 564 vorgeschlagen, Schall auf die Reaktionspartner einwirken zu lassen.

Aus der DE-A-32 32 080 ist bekannt, dass durch teilweise äußere Rückführung des Ad-/Absorbens bzw. der abgeschiedenen Feststoffe eine Verbesserung der Ausnutzung des Ad-/Absorbens und damit letztendlich eine Ad-/Absorbenseinsparung erreichbar ist.

Zur Verbesserung des Reinigungswirkungsgrades wird in der EP-B-0 203 430 ein Verfahren bzw. eine Vorrichtung zur Reinigung von Rauchgas vorgeschlagen, wobei das Verhältnis der Verweilzeit eines dem Reaktor zugeführten Ad-/Absorbens zur Verweilzeit des Rauchgases im Reaktor dadurch geregelt und/oder gesteuert wird, dass im Reaktor sich gegenüber dem Reaktorbehälter bewegende Einbauten, beispielsweise in Form einer rotierenden Schnecke, vorgesehen sind. Diese Schnecke kann mit einer Drehzahl von ca. 0,5 bis 120 U/min angetrieben werden, wobei sich das Ad-/Absorbens teilweise auf den Oberflächen der Schnecke ablagert, jedoch immer wieder von den zu reinigenden Rauchgasen bzw. von zusätzlich eingeblasener Druckluft aufgewirbelt wird. Somit kann insbesondere die Verweilzeit der schwereren Ad-/Absorbenspartikel relativ zur Verweilzeit des Gases im Reaktor gesteuert bzw. geregelt werden.

Nachteilig bei dieser Vorrichtung bzw. diesem Verfahren ist jedoch, dass sich mit zunehmender Betriebszeit des Reaktors sowohl an der Behälterinnenwandung als auch auf der Oberfläche der sich bewegenden Einbauten eine harte Schicht ablagert, welche durch die im Reaktor befindlichen Feststoffe gebildet wird. Diese extrem harte und zähe Schicht kann praktisch nur mit bergmännischen Mitteln abgebaut werden.

Betriebserfahrungen mit vorgenannten Vorrichtungen bzw. Verfahren haben gezeigt, dass ein gleichmäßiges Zerstäubungsbild des eingesprühten Wassers und eine gleichmäßige Verteilung der Feststoffe im Verhältnis zur Rauchgasmenge nicht erzielbar ist. Aufgrund der sich daraus ergebenden ungleichmäßigen und ineffektiven Vermischung von Rauchgas und Ad-/Absorbens ist es unumgänglich, dass nasse Zonen zu Anbackungen führen und trockene Zonen unbefriedigend absorbieren.

Ausgehend von diesem Stand der Technik liegt der vorliegenden Erfindung die Aufgabe zugrunde, eine Vorrichtung zur Reinigung von Rauchgas, insbesondere zur trockenen Reinigung von Rauchgas, zu schaffen, welche einen hohen Reinigungswirkungsgrad aufweist und bei der wesentliche Beeinträchtigungen der Funktion durch Ablagerungen an der Behälterinnenwandung oder auf sich bewegenden Teilen vermieden werden.

Die Erfindung löst diese Aufgabe mit den Merkmalen des Patentanspruchs 1.

Durch das Vorsehen eine Ad-/Absorbenszuführvorrichtung, welche eine Einrichtung zur Beimischung von Wasser umfasst, bis das dem Behälter zuzuführende Ad-/Absorbens einen vorbestimmten Feuchtegehalt aufweist, wird eine Reaktivierung des infolge des letzten Durchlaufs durch den Behälter getrockneten Ad-/Absorbens erreicht. Dabei kann es zum einen zu einer Reaktivierung der bereits reagierten Oberflächen der Ad-/Absorbenspartikel kommen und zum anderen wird das Wasser von den Ad-/Absorbenspartikeln infolge Kapillarwirkung auch ins Partikelinnere gesaugt, so dass es aufgrund der plötzlichen Aufheizung nach dem Eintritt in den Behälterinnenraum zu einer plötzlichen Verdampfung des Wassers kommt. Hierdurch werden die Partikel aufgesprengt ("Popcorn-Effekt") und so eine Vergrößerung der adsorbierenden bzw. absorbierenden Oberfläche erreicht.

Durch das Zusetzen von Wasser direkt in das Ad-/Absorbens, bevor dieses in den Behälterinnenraum geleitet wird, ergibt sich zudem der Vorteil, dass eine relativ hohe Feuchtigkeitsmenge in den Behälter einbringbar ist, ohne dass nach außen hin eine merkbare Stofffeuchte auftritt. Die makroskopische Struktur des im Kreislauf befindlichen Ad-/Absorbens bleibt unverändert trocken und feinstaubförmig, d.h., das Ad-/Absorbens bleibt auf- bzw. verwirbelbar wie trockener Staub. Gleiches gilt dann selbstverständlich für die entstehenden aggressiven wässrigen Säuren. Auf diese Weise kann somit weitgehend vermieden werden, dass die Innenwandungen des Behälters ggf. im Behälter vorgesehene bewegbare Einbauten durch die entstehenden aggressiven Substanzen angegriffen werden.

Wegen des hohen Durchsatzes von staubförmigem Feststoff kann eine hohe Beladung mit rückgeführtem, d.h. nur noch teilweise adsorptionsfähigem bzw. absorbtionsfähigem Ad-/Absorbens erfolgen, wobei das stöchiometrische Verhältnis des noch aktiven Teil des Ad-/Absorbens zur Menge der zu adsorbierenden bzw. absorbierenden Stoffe wegen der hohen Verwirbelung nahe an Eins liegen kann, vorzugsweise im Bereich zwischen 1,0 und 1,5. Hierdurch ergibt sich der Vorteil einer optimalen Ausnutzung des Ad-/Absorbens, da dieses relativ lange Zeit innerhalb eines Kreislaufs gehalten werden kann.

Werden im Behälter bewegbare Einbauten zur Verwirbelung des zu reinigenden Gases mit dem Ad-/Absorbens angeordnet, so kann durch deren Ausbildung als flexible Verwirbelungselemente die Bildung von störenden Schichten weiter reduziert werden. Ggf. entstandene Schichten können durch eine Formänderung der flexiblen Verwirbelungselemente auf einfache Weise beseitigt werden.

Des Weiteren kann eine ggf. an der Innenwandung des Behälters entstehende Schicht die Funktion der Vorrichtung nie so weit beeinträchtigen, dass eine Bewegung der bewegbaren Einbauten in wesentlichem Maß beeinträchtigt wird, wie dies beispielsweise bei der Vorrichtung gemäß der EP-B-0 203 430 der Fall ist, wenn die rotierende Schnecke mit einer sich an die Behälterinnenwandung entstehenden Schicht in Berührung kommt.

Das Entstehen von Ablagerungsschichten auf den flexiblen Verwirbelungselementen kann beispielsweise dadurch verhindert werden, dass in bestimmten zeitlichen Abständen eine Änderung der Bewegungsgeschwindigkeit der Verwirbelungselemente vorgenommen wird, so dass sich die Form der flexiblen Elemente verändert und hierdurch gegebenenfalls bereits entstandene dünne Ablagerungsschichten abgesprengt werden.

Bei der bevorzugten Ausführungsform der Erfindung sind die flexiblen Verwirbelungselemente als Ketten oder Seile ausgebildet, die an einer oder mehreren rotierbar angetriebenen Wellen angeordnet sind. Hierdurch ergibt sich der Vorteil eines mechanisch einfachen und kostengünstigen Aufbaus, wobei insbesondere die Ausbildung der Verwirbelungselemente als Ketten dazu führt, dass bei einer Änderung der Rotationsrichtung oder der Rotationsgeschwindigkeit eine Veränderung der Lage der Kettenglieder gegeneinander und gegen die Welle erfolgt, so dass bereits entstandene Ablagerungsschichten abgesprengt bzw. abgerieben werden.

Zudem ergibt sich der Vorteil, dass an der Innenwandung des Behälters entstehende Ablagerungsschichten von den Kettengliedern immer wieder abgeschlagen werden, sobald diese Schichten so dick werden, dass sie mit den Kettenenden in Berührung gelangen.

Des Weiteren ergibt sich der Vorteil einer geringen Druckdifferenz zwischen Gaszuführ- und Gasabführseite des Behälters, da keinerlei feste Einbauten erforderlich sind, die einen Druckabfall mit sich bringen.

Durch die hohen Rotations- bzw. Bewegungsgeschwindigkeiten der flexiblen Verwirbelungselemente kommt es zusätzlich zu dem durch das Aufeinandertreffen von Ad-/Absorbenspartikel untereinander bewirkten Abrieb zu einem Zerschlagen von größeren Ad-/Absorbenspartikel. Zusätzlich zur Befreiung von Ad-/Absorbenspartikeln von hinsichtlich der gewünschten Adsorption bzw. Absorption inaktiven Oberflächenschichten ist somit die Erzeugung neuer aktiver Oberflächen möglich.

Schließlich ergibt sich aufgrund des Fehlens starrer bewegter Einbauten der Vorteil einer guten Begehbarkeit bzw. Zugänglichkeit des Behälters im Stillstand, da die flexiblen Einbauten unter dem Einwirken der Schwerkraft nach unten hängen und weitgehend Raum für eine gute Begehbarkeit bzw. Zugänglichkeit lassen. Reparaturen innerhalb des Behälters oder ein Austausch der flexiblen Elemente sind somit auf einfache Weise möglich.

Da im Stillstand der Anlage die flexiblen Verwirbelungselemente die Durchgängigkeit der Vorrichtung für das Rohgas nicht blokkieren können, ergibt sich des Weiteren eine Betriebssicherheit auch bei Stillstand der Verwirbelungselemente, wenn auch bei geringerem Wirkungsgrad.

Die Ausbildung der flexiblen Verwirbelungselemente als Ketten oder Seile führt zu dem Vorteil preisgünstiger Ersatz-Verschleißteile.

Der Behälter kann bei der Vorrichtung nach der Erfindung sowohl liegend als auch stehend eingesetzt werden, wodurch die Vorrichtung einem vorhandenen Platzbedarf sehr flexibel angepasst werden kann.

Selbstverständlich können an der Innenwandung des Behälters auch beliebig geformte Strömungsleitelemente vorgesehen sein, die durch eine laufende Veränderung der lokalen Strömungsgeschwindigkeit zu einer besseren Verwirbelung des Gas-Ad-/Absorbens-Gemisches beitragen.

Gemäß einer weiteren Ausführungsform der Vorrichtung nach der Erfindung kann der Behälter liegend angeordnet sein, d.h., die Längsachse des Behälters im Wesentlichen horizontal verlaufen, und die Wellen jeweils senkrecht zur Längsachse des Behälters angeordnet sein. In dieser Ausführungsform kann der Behälter einen im Wesentlichen rechteckigen Querschnitt aufweisen, wobei die parallel zu den Wellen liegenden Wandungen des Behälters Innenseiten aufweisen, die aus mehreren teilzylindrischen Bereichen bestehen. Jede Welle ist dabei vorzugsweise im Wesentlichen in der Achse eines Teilzylinders vorgesehen. Hierdurch ergeben sich in analoger Weise die vorstehend erläuterten Vorteile. Die Wellen können in dieser Ausführungsform selbstverständlich ebenfalls vertikal und/oder horizontal angeordnet sein.

Diese Ausführungsformen mit senkrecht zur Längsachse des Behälters angeordneten Wellen (ob bei vertikaler oder horizontaler Anordnung des Behälters) bieten den weiteren Vorteil, dass ein modularer Aufbau des Behälters möglich ist. Je nach gewünschter Reinungsleistung bzw. gewünschter Reinheit des gereinigten Gases kann somit eine erforderliche Anzahl von Modulen zu einem Behälter kombiniert werden. Dies reduziert die Kosten bei der Planung und beim Bau einer Rauchgasreinigungsanlage erheblich. Des Weiteren sind nachträgliche Änderungen einer Bestehenden Anlage auf einfache und kostengünstige Weise möglich.

In der bevorzugten Ausführungsform der Erfindung ist für das Rohgas und das Ad-/Absorbens wenigstens je eine Zuführöffnung vorgesehen. Selbstverständlich kann jedoch auch das Mischen des Ad-/Absorbens mit dem Rohgas auch an einer dem Behälter vorgelagerten Stelle erfolgen.

In der Ausführungsform der Erfindung mit stehendem Behälter kann die Reinigung des Gases selbstverständlich im Gleichstrom- oder Gegenstromprinzip erfolgen, wobei die Strömungsrichtung des Gases jeweils entweder von unten nach oben oder umgekehrt verlaufen kann. Die Zuführöffnungen für das Ad-/Absorbens und die Zufuhr bzw. Abfuhr des Gases sind hierzu in entsprechender Weise vorzusehen.

In der Ausführungsform der Erfindung mit liegendem Behälter kommt im Wesentlichen nur die Reinigung im Gleichstromprinzip in Frage, da durch den Gasstrom eine Beförderung der Ad-/Absorbenspartikel erfolgt.

In der bevorzugten Ausführungsform der Erfindung weist die Sammelvorrichtung für das Ad-/Absorbens einen Förderer auf, der sich über die gesamte Länge des bodenseitigen Bereichs des Behälters oder über einen der Gasabführseite benachbarten bodenseitigen Bereich erstreckt. Bei Bedarf kann der Förderer teilweise mittels eines oder mehrerer Abdeckbleche abgedeckt sein.

Die Sammelvorrichtung ist vorzugsweise so ausgebildet, dass das im Sammelschacht befindliche Ad-/Absorbens zur Aufrechterhaltung der Druckdifferenz zwischen der Gaszuführseite und der Gasabführseite des Behälters dient. Hierdurch wird vermieden, dass Gas über den externen Zuführweg des Ad-/Absorbens und die Sammelvorrichtung in unmittelbarer Nähe der Gasabführöffnung in den Behälter gelangt, ohne den korrekten "Reinigungsweg" durchlaufen zu haben.

Wird als Ad-/Absorbens Kalkhydrat (Ca(OH)₂) verwendet, so kann anstelle einer Einrichtung zur Beimischung von Wasser auch eine Einrichtung zur Beimischung von Kalkmilch vorgesehen sein. Mit anderen Worten, die erforderliche Zugabe von frischem Ad-/Absorbens in Form von trockenem Kalkhydrat und die separate Zugabe von Wasser kann dadurch ersetzt werden, dass in einem einzigen Zugabevorgang Kalkmilch beigegeben wird. Hierdurch reduziert sich zum einen der Aufwand für die Ad-/Absorbenszuführvorrichtung und zum anderen ergibt sich der Vorteil, dass die zuzugebende Kalkmilch aus Branntkalk (CaO) und Wasser hergestellt werden kann. An die Filteranlage muss somit lediglich Branntkalk angeliefert werden (es wird hier davon ausgegangen, dass Wasser ohnehin vor Ort vorhanden ist), wobei die benötigte Menge Branntkalk weitaus geringer ist, als die vergleichbar benötigte Menge Kalkhydrat. Hierdurch ergibt sich eine Reduzierung von Transportkosten.

Zum Anfahren der Vorrichtung ist in diesem Fall erforderlich, dass der Sammelschacht der Sammelvorrichtung vor einer Inbetriebnahme mit staubförmigem Ad-/Absorbens gefüllt wird.

Durch die spezielle Ausbildung der bewegten Einbauten als flexible Einbauten, die einen hohen Durchsatz von Ad-/Absorbens ermöglicht, kann bei der Vorrichtung nach der Erfindung als Ad-/Absorbens auch Calciumsilicathydrat (CaSiOH) bis zu einer Korngröße von 5 mm und mehr verwendet werden. Calciumsilicathydrat fällt in dieser Form als Abfall bei der Gasbetonherstellung an und stellt somit ein sehr kostengünstiges Ad-/Absorbens dar. Wegen der hierbei anfallenden relativ großen Partikel war die Verwendung mit bekannten Vorrichtungen jedoch nicht möglich bzw. wegen der erforderlichen Aufbereitung des Calciumsilicathydrats unrentabel.

Weitere Ausführungsformen der Erfindung ergeben sich aus den Unteransprüchen.

Die Erfindung wird nachfolgend anhand in der Zeichnung dargestellter Ausführungsbeispiele näher erläutert. In der Zeichnung zeigen:
- Fig. 1: eine schematische Darstellung einer gesamten Anlage zur Reinigung von Rauchgas;
- Fig. 2: eine Darstellung einer ersten Ausführungsform der Vorrichtung nach der Erfindung im Schnitt (Fig. 2a Längsschnitt; Fig. 2b Querschnitt durch den Behälter);
- Fig. 3: einen Teilschnitt durch die Ad-/Absorbens-Sammelvorrichtung gemäß der Linie I-I in Fig. 2a;
- Fig. 4: eine weitere Ausführungsform der Erfindung mit liegendem Behälter in zwei Längsschnittdarstellungen in zwei zueinander senkrechten Ebenen;
- Fig. 5: eine weitere Ausführungsform der Erfindung mit liegendem Behälter in der Darstellungsform gemäß Fig. 4 und
- Fig. 6: eine weitere vereinfachte Ausführungsform der Erfindung mit liegendem Behälter in einer Darstellungsform gemäß den Figuren 4 und 5.

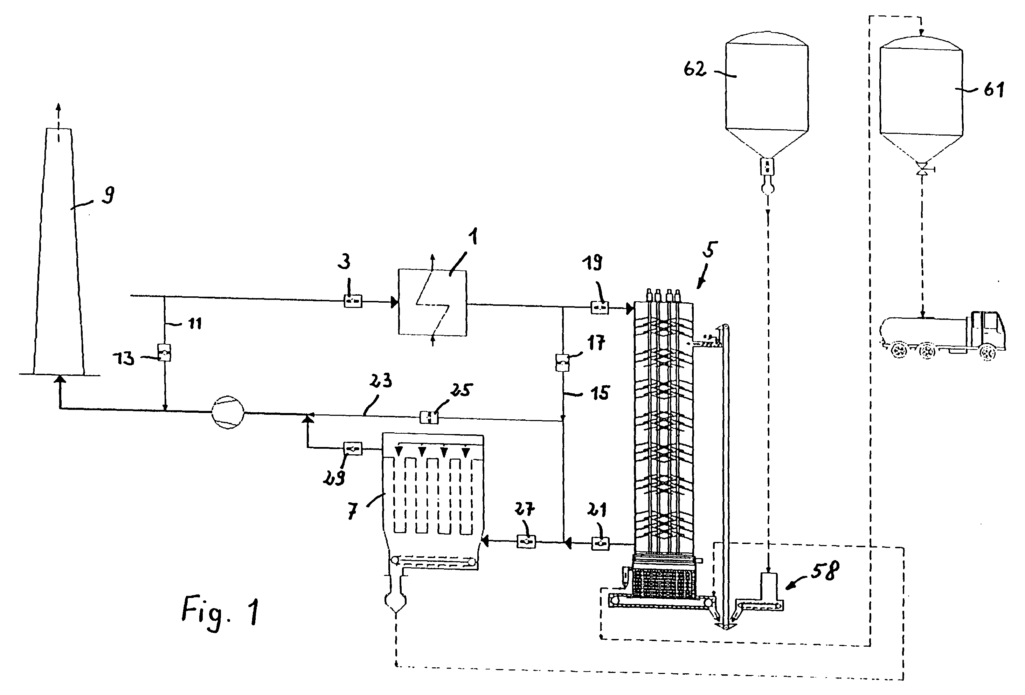

Die in Fig. 1 dargestellte Gesamtanlage zur Reinigung von Rauchgas besteht im Wesentlichen aus einem Vorkühler 1, welchem das zu reinigende Rohgas in Pfeilrichtung über ein Klappe 3 zugeführt wird, sowie aus der eigentlichen Vorrichtung 5 zur Reinigung des Rauchgases, welcher ein Feststoffabscheider 7 nachgeschaltet ist. Das gereinigte Rauchgas wird dann mittels eines Kamins 9 abgegeben. Selbstverständlich kann auch durch eine Parallelschaltung mehrerer Vorrichtungen 5 die Reinigungsleistung erhöht bzw. durch eine Reihenschaltung mehrerer Vorrichtungen 5 die Reinigung der Gase verbessert werden.

Der Weg des Gases durch die Anlage im Normalbetrieb ist in Fig. 1 durch die fett ausgezogenen Linien und Pfeile dargestellt.

Die dünn ausgezogenen Linien stellen Wege dar, die die Betriebssicherheit im Störfall einer oder mehrerer Komponenten gewährleisten. So handelt es sich bei der Leitung 11 und dem zugehörigen Klappe 13 um einen Not-Bypass, mit welchem die gesamte Anlage überbrückt und die Rohgase direkt dem Kamin 9 zugeführt werden können.

Mittels der Leitung 15 und dem zugehörigen Klappe 17 kann in Verbindung mit einer entsprechenden Ansteuerung der Klappen 19 und 21 eine Überbrückung der Vorrichtung 5 vorgenommen werden.

Schließlich kann mittels der Leitung 23 und einer entsprechenden Ansteuerung der Klappen 25, 27 und 29 eine Überbrückung des Feststoffabscheiders 7 erfolgen.

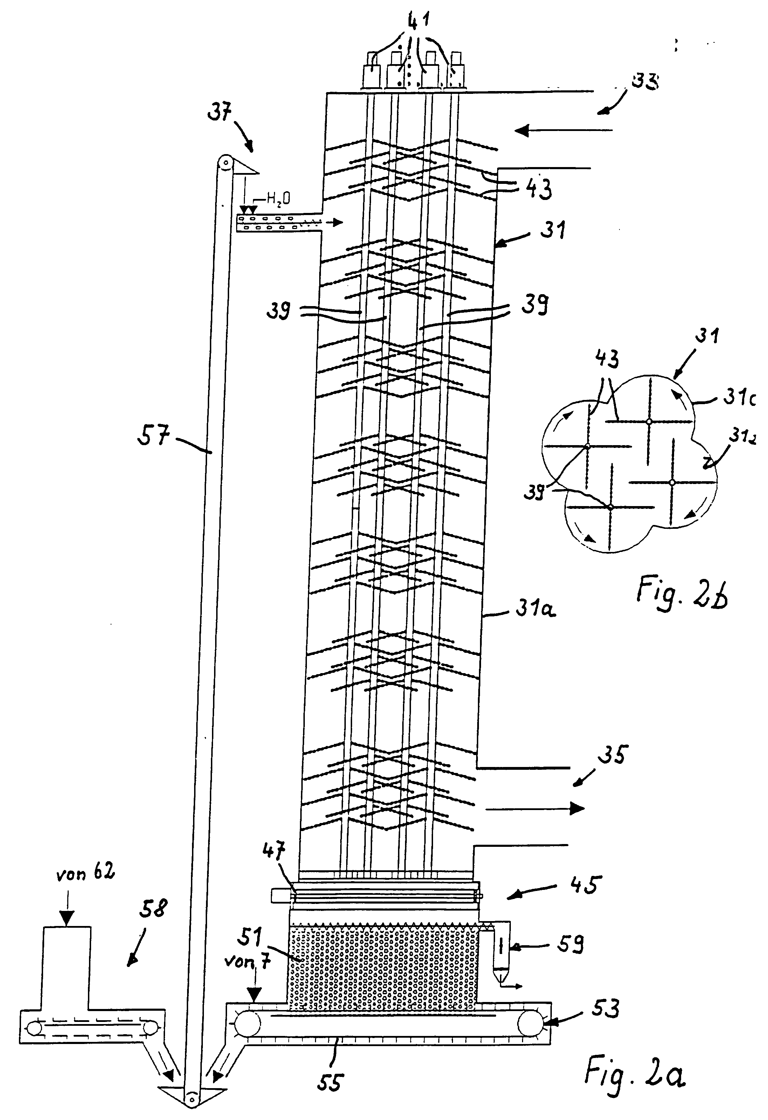

Die Vorrichtung 5, die in Fig. 2a dargestellt ist, umfasst einen Behälter 31, welchem das Rohgas in Pfeilrichtung über eine Zuführöffnung 33 zugeführt wird. Das gereinigte Rohgas wird über eine Abführöffnung 35 im unteren Bereich des Behälters 31 abgeführt und dem Feststoffabscheider 7 (Fig. 1) zugeführt, der beispielsweise als Gewebefilter ausgebildet sein kann. Dem Behälter 31 wird über eine Ad-/Absorbenszuführvorrichtung 37 trockenes bzw. quasi-trockenes staub- bzw. pulverförmiges Ad-/Absorbens zugeführt.

Da die Adsorption bzw. Absorption von Schadstoffen im Rohgas durch die Ad-/Absorbenspartikel verbessert wird, wenn diese eine gewisse Feuchte aufweisen, wird in der Ad-/Absorbenszuführvorrichtung 37 unter Mischen des Ad-/Absorbens Wasser zugegeben, bis ein vorbestimmter Feuchtegehalt erreicht ist. Dies kann selbstverständlich selbsttätig in Form eines geschlossenen Regelkreises erfolgen, wobei der Feuchtegehalt abhängig von bestimmten Parametern, beispielsweise der Temperatur des zugeführten Rohgases, gewählt werden kann. Auf diese Weise kann der Feuchtegehalt des Ad-/Absorbens vor dem Zuführen in das Innere des Behälters 31 beispielsweise bis zur Grenze des Vorliegens einer staubförmigen Struktur erhöht werden. Das Ad-/Absorbens liegt dabei jedoch noch immer in staub- bzw. pulverförmiger Form vor, so dass nach wie vor eine hohe aktive Oberfläche für die Reinigung verfügbar ist.

Da zur Steigerung des Wirkungsgrades eine hohe Relativgeschwindigkeit zwischen den Ad-/Absorbenspartikeln und dem Rohgas wünschenswert ist, sind in der Längsachse des Behälters 31 mehrere, im gezeigten Beispiel vier, Wellen 39 vorgesehen, welche parallel zur Längsachse des Behälters verlaufen. Die Wellen sind mittels Elektromotoren 41, die an der Oberseite des Behälters 31 angeordnet sind, rotierend angetrieben.

Zur Verwirbelung des Gas-Ad-/Absorbens-Gemisches sind im Behälterinneren an den Wellen 39 Ketten 43 angeordnet. Diese hängen unter Einwirkung der Schwerkraft im Stillstand der Wellen nach unten und erstrecken sich unter Einwirkung der Zentrifugalkraft bei einer Rotation der Wellen nach aussen. Selbstverständlich können anstelle von Ketten auch beliebige andere flexible Verwirbelungselemente, beispielsweise Seile, verwendet werden. Ketten bieten jedoch den Vorteil, dass infolge der Durchbrüche in den Kettengliedern eine intensivere Verwirbelung erreichbar ist. An den flexiblen Verwirbelungselementen können in nicht dargestellter Weise auch kleinere starre oder flexible Elemente zur Erhöhung des Luftwiderstands vorgesehen sein.

Wie in Fig. 2 dargestellt, kann der Behälter 31 eine Wandung 31a aufweisen, deren Innenwandung mehrere teilzylindrische Bereiche 31b aufweist. Die vier Wellen sind dann, wie in Fig. 2b dargestellt, vorzugsweise so angeordnet, dass diese jeweils in der Achse der teilzylindrischen Bereiche 31b liegen.

Hierdurch wird zum einen gewährleistet, dass das Gas infolge der Verwirbelung durch die Verwirbelungselemente 43 jeder Welle von der Innenwandung der Bereiche 31b wieder in Richtung Behältermitte geleitet werden. Zur Verbesserung der Verwirbelung können jeweils benachbarte Wellen 39, wie in Fig. 2b dargestellt, mit entgegengesetztem Drehsinn angetrieben sein. Die als Ketten ausgebildeten Verwirbelungselemente 43 sind dann vorzugsweise so lang gewählt, dass diese bei einer vorbestimmten Drehzahl mit ihren äußeren Enden einen Außenkreis beschreiben, dessen Durchmesser nur geringfügig kleiner ist, als der Innendurchmesser der teilzylindrischen Bereiche 31b. Lagern sich im Verlauf des Betriebs der Vorrichtung Ad-/Absorbensschichten an der Innenwandung des Behälters 31 an, so werden diese von den Kettenenden abgeschlagen, sobald die Schichtdicke einen bestimmten Wert überschreitet. In jedem Fall ist gegenüber der Verwendung starrer Verwirbelungselemente erreicht, dass auch bei größeren Schichtdicken die für die Bewegung der Wellen 39 erforderliche Antriebsleistung im Wesentlichen unverändert bleibt.

Um das Anlagern dickerer Schichten an den Verwirbelungselementen 43 zu vermeiden, kann, wie bereits erwähnt, in bestimmten zeitlichen Abständen die Drehrichtung jeder Welle 39 umgekehrt oder die Rotationsgeschwindigkeit verändert werden. Hierdurch ergibt sich eine Formänderung der flexiblen Verwirbelungselemente 43, wodurch die gegebenenfalls angelagerten Schichten abplatzen.

Wie in Fig. 2b angedeutet, können die Wellen 39 hinsichtlich ihrer Rotationsbewegung synchronisiert angetrieben werden, so dass die Ketten 43 im Bereich der Behältermitte nicht aneinanderschlagen. Zu Reinigungszwecken kann diese Synchronisation auch kurzfristig aufgehoben werden, so dass die Ketten sich durch gegenseitiges Aneinanderschlagen reinigen.

In axialer Richtung der Wellen 39 können die Ketten beispielsweise gleichmäßig verteilt angeordnet sein, wobei zur Vermeidung von Unwuchten bzw. von Verbiegungen der Wellen eine symmetrische Anordnung von Ketten in einer zur Welle senkrechten Ebene vorzuziehen ist. Wie in Fig. 2b dargestellt, können beispielsweise in einer Ebene jeweils 4 Ketten vorgesehen sein. Die Ketten 43 können zur Erzeugung gewünschter Verwirbelungseffekte auch verschieden lang ausgebildet sein.

Die Ketten können, wie in Fig. 2a dargestellt, in axialer Richtung auch in Gruppen angeordnet sein, wobei Zonen hoher Verwirbelung mit Beruhigungszonen abwechseln. Insbesondere in den Übergangsschichten entstehen dann hohe Relativgeschwindigkeiten zwischen den Ad-/Absorbenspartikeln und dem Gas.

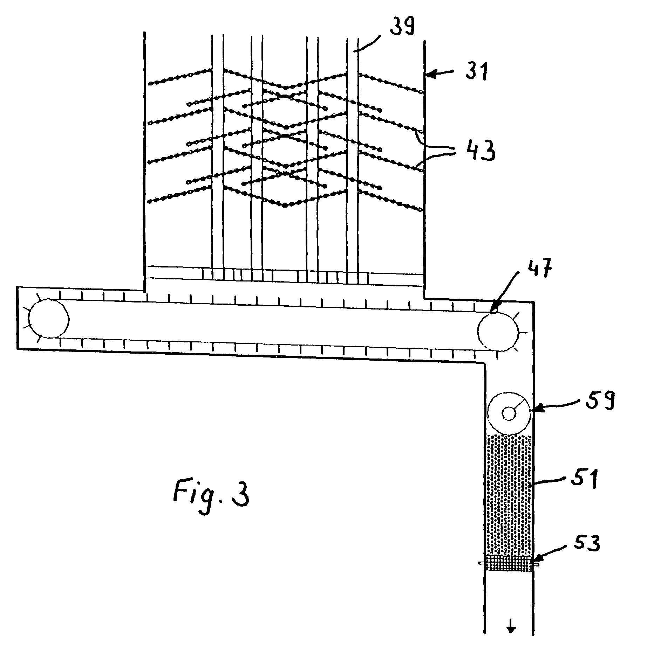

Am bodenseitigen Ende des Behälters 31 ist eine Sammelvorrichtung 45 für das Ad-/Absorbens vorgesehen, welche, wie aus Fig. 3 deutlicher erkennbar, eine Fördervorrichtung 47 umfasst, welche das sich auf einer Förderkette 49 ansammelnde (teilweise mit Schadstoffen beladene) Ad-/Absorbens einem Sammelschacht 51 zuführt. Die Förderkette 49 erstreckt sich dabei vorzugsweise über die gesamte bodenseitige Fläche des Behälters 31.

Am bodenseitigen Ende des Sammelschachts 51 ist eine weitere Fördervorrichtung 53 vorgesehen, welche mittels einer weiteren Förderkette 55 das Ad-/Absorbens erneut der Ad-/Absorbenszuführvorrichtung 37 zuführt. Letztere kann hierzu beispielsweise eine als Becherwerk ausgebildete Förderstrecke 57 umfassen. Der Förderstrecke 57 wird auch das mittels des Feststoffabscheiders 7 (Fig. 1) abgeschiedene staubförmige Produkt, das weitgehend aus Ad-/Absorbens besteht, zugeführt. Hierdurch ergibt sich eine optimale Ausnützung des Ad-/Absorbens.

Des weiteren umfasst die Ad-/Absorbenszuführvorrichtung 37 eine Zuführvorrichtung 58 für Frischgut, das heißt frisches Ad-/Absorbens. Diese Frischgutzuführvorrichtung kann, wie in den Figuren 1 und 2a dargestellt, das Frischgut an der Unterseite der Förderstrecke 57 aus einem Ad-/Absorbenssilo 62 (Fig. 1) zuführen. Selbstverständlich kann das Zuführen von Frischgut jedoch auch an jeder Stelle zwischen der Ad-/Absorbenszuführöffnung und der Ad-/Absorbenssammelvorrichtung 45 erfolgen. Die dem bereits im Kreislauf befindlichen Ad-/Absorbens zugeführte Menge an Frischgut kann abhängig von bestimmten Parametern, z.B. der zu ad-/absorbierenden Schadstoffmenge, gesteuert oder geregelt werden.

Zusätzlich wird mittels der Ad-/Absorbenszuführvorrichtung 37 dem im Kreislauf befindlichen Ad-/Absorbens in bereits oben beschriebener Weise Wasser bis zu einem bestimmten Feuchtegehalt zugeführt.

Eine der eingetragenen und abgeschiedenen Menge entsprechender Anteil der entstehenden Reaktionsprodukte wird aus dem Ad-/Absorbenskreislauf aus dem Sammelschacht 51, wie in Fig. 3 dargestellt, mittels einer Abführvorrichtung 59, die beispielsweise eine Förderschnecke umfassen kann, ausgeschleust und dem Reststoffsilo 61 (Fig. 1) zur Entsorgung zugeführt. Die im Kreislauf befindliche Ad-/Absorbensmenge wird so im Wesentlichen konstant gehalten.

Durch die im Sammelschacht 51 befindliche Ad-/Absorbensschicht wird gleichzeitig ein Aufrechterhalten der Druckdifferenz zwischen der Zuführöffnung 33 und der Abführöffnung 35 für das Gas erreicht und auf diese Weise verhindert, dass das Rohgas über die Ad-/Absorbenszuführvorrichtung 37 und den Sammelschacht 51 in Richtung auf die Abführöffnung 35 gelangt, ohne die korrekte Reinigungsprozedur durchlaufen zu haben.

Die vorstehende Ausbildung der Ad-/Absorbenszuführvorrichtung 37 und der Ad-/Absorbenssammelvorrichtung 45 gewährleistet den gewünschten hohen Ad-/Absorbensdurchsatz durch den Behälter 31. Diese Elemente können selbstverständlich auch mit bekannten Behältern 31 verwendet werden.

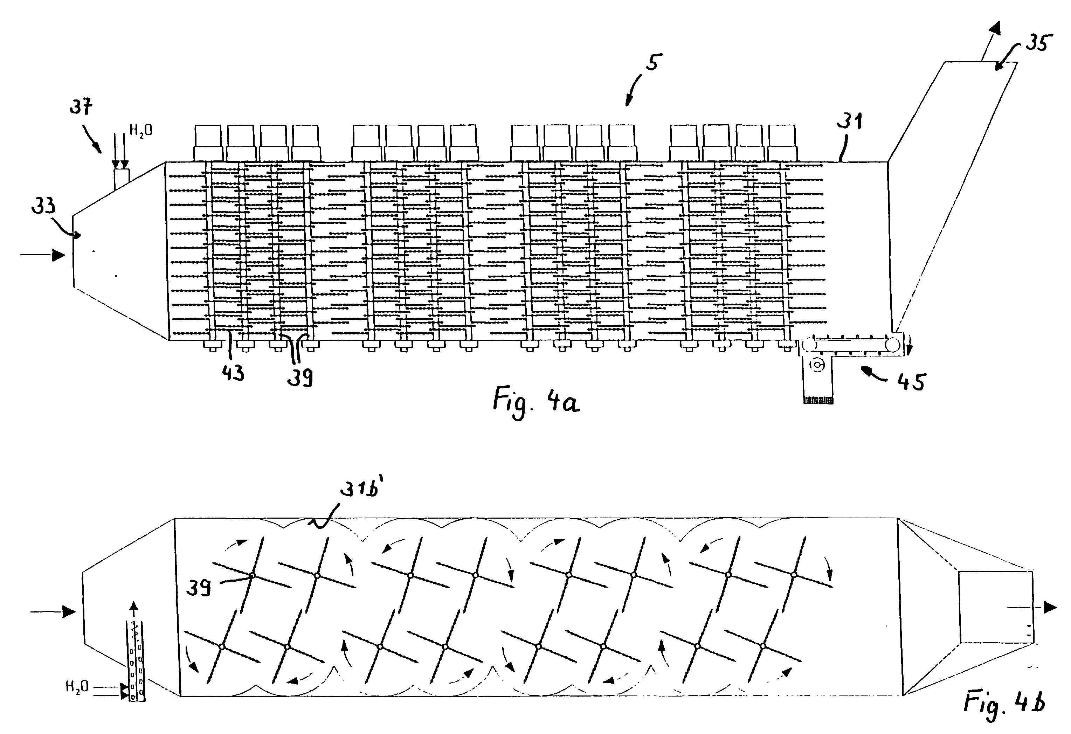

Insgesamt betrachtet, ergibt sich bei der Vorrichtung nach der Erfindung nicht nur eine Verbesserung des Reinigungswirkungsgrads bei gleichzeitig einfachem Aufbau der Vorrichtung, sondern auch eine Verbesserung der Ausnützung des Ad-/Absorbens durch die Reaktivierung in der Ad-/Absorbenszuführvorrichtung. Jedes Ad-/Absorbenspartikel durchläuft mehrfach den Behälter 31 und trägt mehrfach zu einer Reinigung des Gases bei. Das Ad-/Absorbens verbleibt somit - bei entsprechender Gesamtmenge von Ad-/Absorbens innerhalb des Kreislaufs - relativ lange im Kreislauf (zwei Tage und mehr), wodurch sich zusätzlich der Vorteil ergibt, dass entstehende Reaktionsprodukte durch den vorhandenen Restsauerstoff im Gas und durch die Feuchte aufoxidiert werden. Beispielsweise wird im Ad-/Absorbens vorhandenes Calciumsulfit (CaSO₃) zu Calciumsulfat (CaSO₄) aufoxidiert. Dies geschieht bereits innerhalb des Ad-/Absorbenskreislaufs. Eine nachgeschaltete Stufe zur Aufoxidation des mittels der Abführvorrichtung 59 abgeführten verbrauchten Ad-/Absorbens ist somit nicht erforderlich.
Nachfolgend wird das in Fig. 4a und Fig. 4b dargestellte weitere Ausführungsbeispiel der Erfindung beschrieben, wobei lediglich auf die zu dem Ausführungsbeispiel gemäß den Figuren 2 und 3 bestehenden Unterschiede eingegangen wird. Insbesondere wesentliche Teile der Sammelvorrichtung 45 für das Ad-/Absorbens und die Ad-/Absorbenszuführvorrichtung 37 bleiben dem Grunde nach unverändert.

Wie in Fig. 4a dargestellt, ist der Behälter 31 der Vorrichtung 5 liegend ausgebildet, wobei die Wellen 39 senkrecht zur Längsachse des Behälters in vertikaler Richtung angeordnet sind. Der Antrieb der Wellen verbleibt im Wesentlichen unverändert.

Durch die liegende Ausbildung des Behälters 31 ergibt sich jedoch der Vorteil, daß die Lagerung der Wellen, insbesondere auch an der Unterseite, außerhalb des Behälterinnenraums erfolgen kann und somit die Lager vor aggressiven Gasen geschützt sind. Die Zuführöffnung 33 für das Rohgas erweitert sich zunächst bis auf den gesamten Querschnitt des Behälters 31, wodurch eine Reduzierung der Strömungsgeschwindigkeit erreicht wird. Auf diese Weise verbleiben die zu reinigenden Gase innerhalb des Behälters 31, was zu einer Steigerung der ReinigungsWirkung beiträgt.

Die an den Wellen 39 angeordneten Ketten 43 sind im Wesentlichen in äquidistanten axialen Abständen an den Wellen angeordnet und so über den Umfang der Welle verteilt, dass eine Unwucht vermieden wird. Selbstverständlich können jedoch auch bei dieser Ausführungsform wiederum in jeder Ebene mehrere, beispielsweise vier, Ketten vorgesehen sein, so dass in jeder zur Welle senkrechten Ebene eine Unwucht ausgeschlossen ist.

Wie aus Fig. 4b ersichtlich, sind die zu den Wellen 39 parallelen Innenwandungen des Behälters wiederum mit teilzylinderförmigen Abschnitten 31b' versehen, wodurch sich die bereits oben beschriebenen Vorteile ergeben.

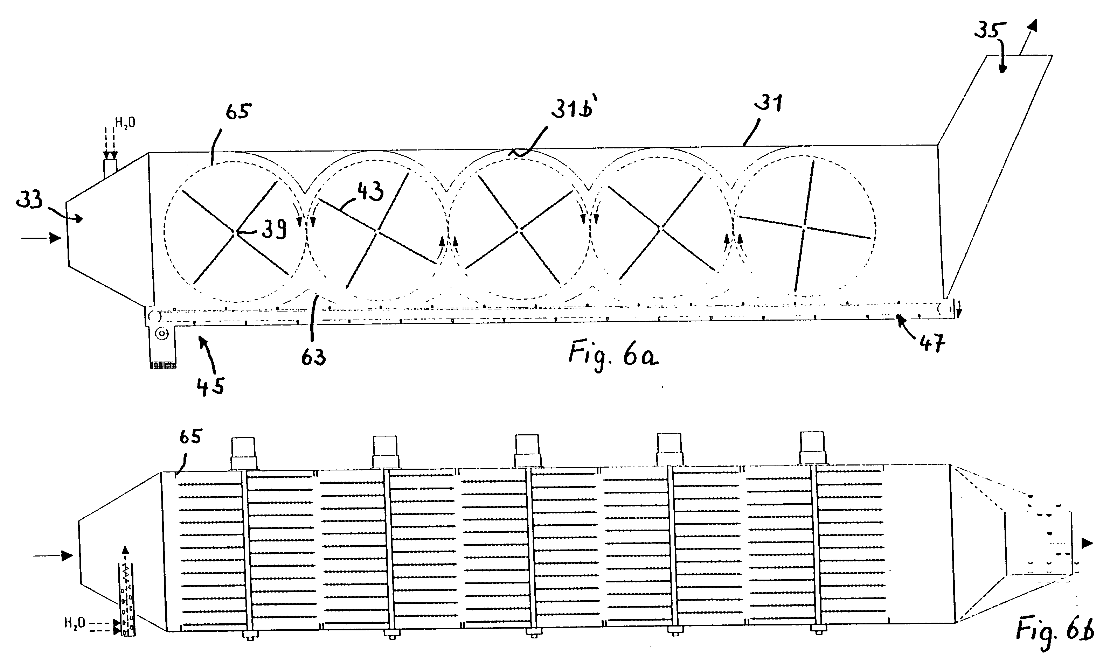

Um zu verhindern, dass sich entlang der zu den Wellen senkrecht verlaufenden Behälterinnenwandungen Beruhigungszonen hinsichtlich der Verwirbelung ausbilden, können an diesen Innenwandungen (wie in Verbindung mit Fig. 6 erläutert) nicht dargestellte Strömungsleitelemente vorgesehen sein, die eine ungestörte Gasströmung in Richtung auf die Gasabführöffnungen 35 verhindern.

In der bodenseitigen Wandung des Behälters 31 ist im Bereich der Gasabführöffnung 35 wiederum die Sammelvorrichtung 45 für das Ad-/Absorbens vorgesehen. Diese umfasst wiederum eine Fördervorrichtung 47, welche sich über die gesamte Breite des Behälters 31 erstreckt. Im übrigen ist die Sammelvorrichtung 45 unverändert, ebenso wie die Ad-/Absorbenszuführvorrichtung 37. Aus Gründen der Übersichtlichkeit wurde auf die Darstellung des Kreislaufs für das Ad-/Absorbens verzichtet.

Bei dieser Ausführungsform der Erfindung ist im Wesentlichen nur ein Betrieb nach dem Gleichstromprinzip möglich.

Bei der Vorrichtung gemäß Fig. 4 setzen sich die zugeführten Ad-/Absorbenspartikel immer wieder an der bodenseitigen Wandung ab und werden erneut aufgewirbelt. Dabei werden die Ad-/Absorbenspartikel vom Gasstrom in Richtung auf die Gasabführöffnung 35 mitgetragen. Da im hinteren Bereich des Behälters 31, d.h., im Bereich der Sammelvorrichtung 45 keine rotierenden Wellen mehr vorgesehen sind, setzen sich die Ad-/Absorbenspartikel bereits zum großen Teil auf der Förderkette der Sammelvorrichtung 45 ab. Diejenigen Partikel, die von der Gasströmung noch mit in Richtung auf die Gasabführöffnung 35 mitgenommen werden, setzen sich infolge der Schwerkraft durch die schräg aufwärts gerichtete Ausbildung des Abführkanals im Laufe der Zeit an der unteren Wandung des Abführkanals ab und rutschen infolge der relativ großen Steilheit dieser Wandung nach unten in Richtung auf die Sammelvorrichtung 45. Auf diese Weise ist gewährleistet, dass der größte Teil des Ad-/Absorbens in die Sammelvorrichtung 45 gelangt. Der bei jeder Ausführungsform vom Gasstrom durch die Gasabführöffnung abgeführte Anteil des Ad-/Absorbens, insbesondere kleinere Ad-/Absorbenspartikel, werden dann über den Feststoffabscheider 7 (Fig. 1) zurückgewonnen.

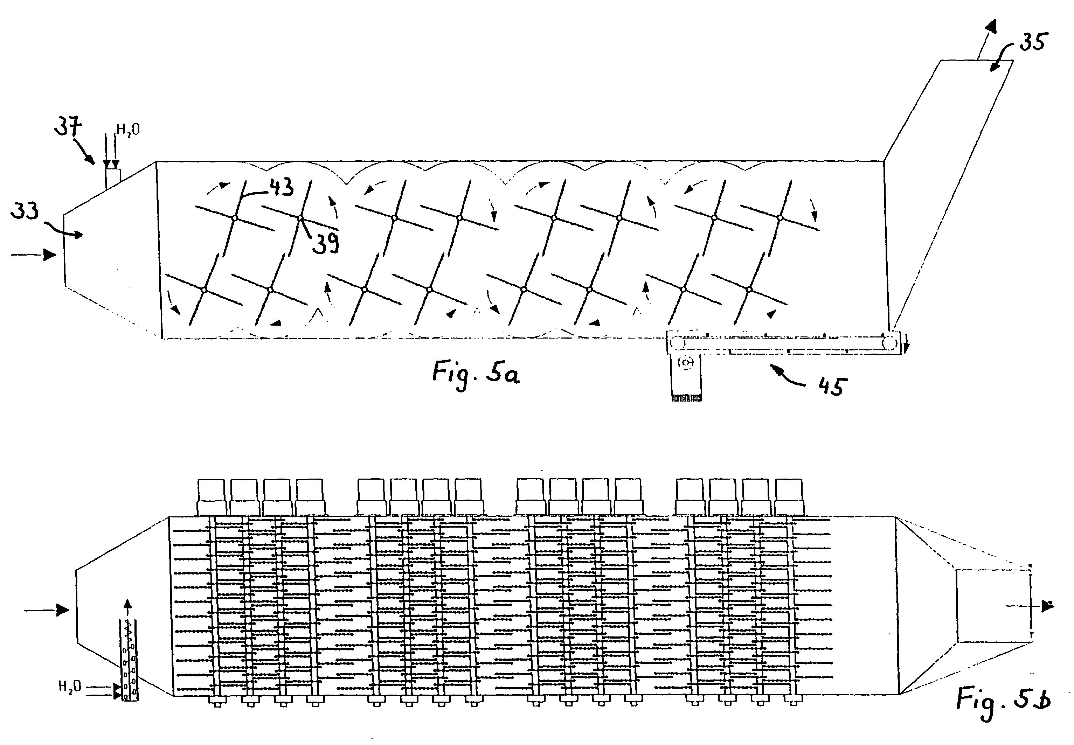

Die Ausführungsform gemäß Fig. 5 unterscheidet sich von der Ausführungsform nach Fig. 4 lediglich dadurch, dass die Wellen 39 horizontal und senkrecht zur Längsachse des Behälters 31 angeordnet sind. Somit kann in praktisch vollem Umfang auf die vorstehenden Ausführungen verwiesen werden.

Wie in Fig. 5a dargestellt, ist die Sammelvorrichtung 45 für das Ad-/Absorbens mit einer längeren Förderkette versehen, welches so angetrieben ist, dass das auf der Förderkette befindliche Ad-/Absorbens in Richtung auf das Behälterende gefördert und von da an der Unterseite der Förderkette in Richtung auf den Sammelschacht gefördert wird. Hierdurch kann erreicht werden, dass die Konzentration der Ad-/Absorbenspartikel im Bereich der Wellen 39, die sich oberhalb der Förderkette befinden, gegenüber der Ad-/Absorbenskonzentration im vorderen Bereich des Behälters 31 verringert. Auf diese Weise reduziert sich auch der Anteil von durch das Gas über die Gasabführöffnung 35 abgeführten Ad-/Absorbenspartikeln.

Durch die horizontale Ausbildung der Wellen 39 wickeln sich die Ketten 43 bei geringer Drehzahl der Wellen, beispielsweise beim Stillsetzen der Vorrichtung, um die Wellen, so dass ein ungehinderter Zugang zum Innenbereich des Behälters 31 möglich ist. Bei höheren Drehzahlen erfolgt jedoch ein Abwickeln der Ketten infolge der Zentrifugalkraft, so dass auch bei dieser Ausführungsform eine optimale Verwirbelung des Gas-Ad-/Absorbens-Gemisches sichergestellt ist.

Fig. 6 zeigt eine vereinfachte Ausführungsform der Erfindung bei ebenfalls liegendem Behälter 31. Ebenso wie bei der Ausführungsform gemäß Fig. 5 sind die Wellen 39 wiederum horizontal und senkrecht zur Längsachse des Behälters 31 angeordnet. Im Unterschied zu dieser Ausführungsform ist jedoch nur eine einzige Reihe von Wellen 39 vorgesehen, wobei die Ketten auch nur so lang ausgebildet sind, dass eine Berührung der Ketten untereinander vermieden ist. Demzufolge kann auf eine Synchronisierung der Antriebe für die Wellen 39 verzichtet werden.

Während die obere Wandung des Behälters 31 wiederum die bekannten teilzylindrischen Bereiche aufweist, erstreckt sich über die gesamte untere Innenwandung eine Förderkette der Sammelvorrichtung 45 für das Ad-/Absorbens. Dieses kann, wie in Fig. 6a dargestellt, entweder so angetrieben sein, dass sich die Oberseite der Förderkette in Richtung auf die Gasabführöffnung 35 bewegt, so dass das Ad-/Absorbens zwischen der Unterseite der Förderkette und der Behälterinnenwandung in Richtung auf den Sammelschacht der Vorrichtung 45 gefördert wird. Hierdurch ergibt sich ein relativ rascher Durchlauf des Ad-/Absorbens, welches immer wieder von der Oberseite der Förderkette aufgewirbelt wird.

Die Förderkette kann jedoch auch entgegengesetzt angetrieben werden, so dass das Ad-/Absorbens, das sich auf der Förderkette ablagert, immer wieder in Richtung auf die Gaszuführöffnung 33 bewegt wird. Die Geschwindigkeit der Förderkette muss dann jedoch größer gewählt werden, als die mittlere Bewegungsgeschwindigkeit der Ad-/Absorbenspartikel im Gasstrom. Bei diesem Antrieb der Förderkette kann die Verweildauer der Ad-/Absorbenspartikel im Innenraum des Behälters 31 erhöht werden.

Wie in Fig. 6 dargestellt, können überhalb der Förderkette der Ad-/Absorbenssammelvorrichtung 45 Strömungsleitelemente 63 vorgesehen sein, die in Bereichen zwischen den äußeren Kreisbahnen der Ketten 43 angeordnet sind und eine den kreiszylindrischen Bereichen 31b' der oberen Wandung entsprechende Funktion ausüben.

Des weiteren sind, wie gestrichelt in Fig. 6a angedeutet und auch Fig. 6b ersichtlich, an den seitlichen Innenwandungen des Behälters 31 weitere Strömungsleitelemente 65 vorgesehen, die verhindern, dass Gas nicht oder nur geringfügig verwirbelt entlang dieser Wege von der Zuführöffnung 33 zur Abführöffnung 35 gelangt.

## Patentansprüche

1. Vorrichtung zur Reinigung von Rauchgas
a) mit einem Behälter (31), welchem Rohgas und ein Ad-/Absorbens zur Reinigung des Rohgases über wenigstens eine Zuführöffnung (33) zuführbar ist und aus welchem das gereinigte Gas über wenigstens eine Abführöffnung (35) abführbar ist,
b) mit einer Ad-/Absorbenszuführvorrichtung (37) für das Zuführen von quasi-trockenem staub- oder pulverförmigem Ad-/Absorbens in den Behälter (31), derart, dass im Behälter (31) eine Durchmischung des Rohgases und des Ad-/Absorbens erfolgt,
c) wobei die Ad-/Absorbenszuführvorrichtung (37) eine Einrichtung zur Beimischung von Wasser zu dem Ad-/Absorbens umfasst, welche dem Ad-/Absorbens Wasser zuführt, bis ein vorbestimmter Feuchtegehalt des dem Behälter (31) zuzuführenden Ad-/Absorbens erreicht ist, bei dem das Ad-/Absorbens eine quasi-trockene staub- oder pulverförmige makroskopische Struktur aufweist, und
d) wobei die Ad-/Absorbenszuführvorrichtung (37) eine Zuführvorrichtung (58) für das Zuführen von frischem Ad-/Absorbens zu dem im Kreislauf befindlichen Ad-/Absorbens umfasst,
e) mit einer am bodenseitigen Ende des Behälters (31) vorgesehenen Sammelvorrichtung (45), welche das aus dem im Behälter (31) vorhandenen Rohgas-Ad-/Absorbensgemischs absinkende Ad-/Absorbens sammelt und einen vorbestimmten Anteil des gesammelten Ad-/Absorbens der Ad-/Absorbenszuführvorrichtung (37) zuführt und
f) mit einer Abführvorrichtung (59) für das Abführen des verbleibenden Anteils des gesammelten Ad-/Absorbens aus dem Kreislauf.

2. Vorrichtung nach Anspruch 1, **dadurch gekennzeichnet, dass** in dem Behälter (31) bewegbare Einbauten (39) vorgesehen sind, welche vorzugsweise flexible Verwirbelungselemente (43) aufweisen.

3. Vorrichtung nach Anspruch 2, **dadurch gekennzeichnet, dass** die flexiblen Verwirbelungselemente (43) als Ketten oder Seile ausgebildet sind, welche vorzugsweise an einer oder mehreren rotierbar angetriebenen Wellen (39) angeordnet sind.

4. Vorrichtung nach Anspruch 3, **dadurch gekennzeichnet, dass** die Wellen (39) senkrecht zur Längsachse des Behälters angeordnet sind.

5. Vorrichtung nach einem der vorhergehenden Ansprüche, **dadurch gekennzeichnet, dass** für das Rohgas und das Ad-/Absorbens wenigstens je eine Zuführöffnung vorgesehen ist.

6. Vorrichtung nach Anspruch 5, **dadurch gekennzeichnet, dass** die wenigstens eine Zuführöffnung (33) für das Rohgas und die wenigstens eine Öffnung für das Ad-/Absorbens sowie wenigstens eine Abführöffnung (35) für das gereinigte Gas in axialen Endbereichen des Behälters (31) so angeordnet sind, dass die Reinigung des Rohgases im Gleichstrom- oder Gegenstromprinzip erfolgt.

7. Vorrichtung nach einem der vorhergehenden Ansprüche, **dadurch gekennzeichnet, dass** die Sammelvorrichtung (45) bei vertikaler Längsachse des Behälters (31) an der bodenseitigen Behälterstirnseite vorgesehen ist.

8. Vorrichtung nach einem der Ansprüche 1 bis 6, **dadurch gekennzeichnet, dass** die Sammelvorrichtung (45) bei horizontaler Längsachse des Behälters (31) am bodenseitigen Bereich der Behälterwandung vorgesehen ist.

9. Vorrichtung nach einem der vorhergehenden Ansprüche, **dadurch gekennzeichnet, dass** ein Förderer (47) der Sammelvorrichtung (45) das Ad-/Absorbens in einen Sammelschacht (51) fördert, aus welchem der vorbestimmte Anteil des Ad-/Absorbens der Ad-/Absorbenszuführvorrichtung (31) zuführbar ist, wobei das im Sammelschacht befindliche Ad-/Absorbens zur Aufrechterhaltung der Druckdifferenz zwischen der Gaszuführseite und der Gasabführseite des Behälters dient.

10. Vorrichtung nach Anspruch 9, **dadurch gekennzeichnet, dass** sich der Förderer (47) der Sammelvorrichtung (45) über die gesamte Länge des bodenseitigen Bereichs der Behälterwandung oder über einen der Gasabführseite benachbarten Bereich erstreckt.

11. Vorrichtung nach einem der vorhergehenden Ansprüche, **dadurch gekennzeichnet, dass** als Ad-/Absorbens Kalkhydrat (Ca(OH)₂) verwendet ist.

12. Vorrichtung nach einem der vorhergehenden Ansprüche, **dadurch gekennzeichnet, dass** anstelle der Einrichtung zur Beimischung von Wasser eine Einrichtung zur Beimischung von aus Branntkalk (CaO) und Wasser hergestellter Kalkmilch vorgesehen ist.

13. Vorrichtung nach einem der vorhergehenden Ansprüche, **dadurch gekennzeichnet, dass** das stöchiometrische Verhältnis des noch aktiven Teils des Ad-/Absorbens zur Menge der zu adsorbierenden/absorbierenden Stoffe im Bereich zwischen 1,0 und 1,5 liegt.

## Claims

1. A device for cleaning flue gas
a) with a container (31), which can be supplied with crude gas and an ad/absorbent for cleaning the crude gas via at least one supply opening (33) and from which the cleaned gas can be extracted via at least one extraction opening (35),
b) with an ad/absorbent supply device (37) for the supply of semi-dry dusty or pulverulent ad/absorbent into the container (31) in such a manner that a mixing of the crude gas and the ad/absorbent takes place in the container (31),
c) the ad/absorbent supply device (37) comprising a device for admixing water to the ad/absorbent, which supplies water to the ad/abaorbent until a predetermined moisture content is reached in the ad/absorbent which is to be supplied to the container (31), in which the ad/absorbent has a semi-dry dusty or pulverulent macroscopic structure, and
d) the ad/absorbent supply device (37) comprising a supply device (58) for the supply of fresh ad/absorbent to the ad/absorbent disposed in the circuit,
e) with a collecting device (45), which is provided at the base end of the container (31) and collects the ad/absorbent descending from the crude gasad/absorbent mixture present in the container (31) and supplies a predetermined proportion of the collected ad/absorbent to the ad/absorbent supply device (37) and
f) with an extraction device (59) for extracting the remaining proportion of the collected ad/absorbent from the circuit.

2. A device according to claim 1, **characterised in that** movable fixtures (39) are provided in the container (31), which preferably comprise flexible turbulence elements (43).

3. A device according to claim 2, **characterised in that** the flexible turbulence elements (43) are constructed as chains or cables, which are preferably arranged on one or more rotatably driven shafts (39).

4. A device according to claim 3, **characterised in that** the shafts (39) are arranged perpendicular to the longitudinal axis of the container.

5. A device according to one of the preceding claims, **characterised in that** at least one supply opening is provided in each case for the crude gas and the ad/absorbent.

6. A device according to claim 5, **characterised in that** the at least one supply opening (33) for the crude gas and the at least one opening for the ad/absorbent as well as at least one extraction opening (35) for the cleaned gas are arranged in axial end regions of the container (31) in such a manner that the cleaning of the crude gas is effected using the uni-directional current or counter current principle.

7. A device according to one of the preceding claims, **characterised in that** the collecting device (45) is provided on the base-side end face of the container in the case of a vertical longitudinal axis of the container (31).

8. A device according to one of claims 1 to 6, **characterised in that** the collecting device (45) is provided on the base-side region of the container wall in the case of a horizontal longitudinal axis of the container (31).

9. A device according to one of the preceding claims, **characterised in that** a conveyor (47) of the collecting device (45) conveys the ad/absorbent into a collecting shaft (51), from which the predetermined proportion of ad/absorbent can be supplied to the ad/absorbent supply device (31), the ad/absorbent disposed in the collecting shaft being used to maintain the pressure difference between the gas supply side and the gas extraction side of the container.

10. A device according to claim 9, **characterised in that** the conveyor (47) of the collecting device (45) extends over the entire length of the base-side region of the container wall or over a region adjacent the gas extraction side.

11. A device according to one of the preceding claims, **characterised in that** calcium hydroxide (Ca(OH)₂) is used as ad/absorbent.

12. A device according to one of the preceding claims, **characterised in that**, instead of the device for admixing water, a device is provided for admixing lime milk manufactured from quicklime (CaO) and water.

13. A device according to one of the preceding claims, **characterised in that** the stoichiometric ratio of the still active proportion of the ad/absorbent to the quantity of substances in the container to be adsorbed/absorbed lies in the range between 1.0 and 1.5.

## Revendications

1. Dispositif pour la purification de gaz de fumée
a) comportant un récipient (31), auquel un gaz brut et un agent adsorbant/absorbant pour purifier le gaz brut par l'intermédiaire d'au moins une ouverture d'amenée (33) peuvent être amenés et à partir duquel le gaz purifié peut être évacué par l'intermédiaire d'au moins une ouverture d'évacuation (35),
b) un dispositif (37) d'amenée d'agent adsorbant/absorbant servant à amener de l'agent adsorbant/absorbant sous forme de poussière ou de poudre quasiment sèche dans le récipient (31) de telle sorte qu'un mélange du gaz brut et de l'agent adsorbant/absorbant s'effectue dans le récipient (31),
c) le dispositif (37) d'amenée d'agent adsorbant/absorbant comprenant un dispositif pour mélanger de l'eau à l'agent adsorbant/absorbant, qui envoie de l'eau à l'agent adsorbant/absorbant, jusqu'à ce ce que soit atteinte une teneur prédéterminée en humidité de l'agent adsorbant/absorbant devant être envoyé au récipient (31), pour laquelle l'agent adsorbant/absorbant possède une structure macroscopique à l'état de poussière ou de poudre quasiment sèche, et
d) le dispositif (37) d'amenée de l'agent adsorbant/absorbant comporte un dispositif d'amenée (58) pour l'amenée d'agent adsorbant/absorbant frais à l'agent adsorbant/absorbant situé dans le circuit,
e) comportant un dispositif de collecte (45), qui est prévu sur l'extrémité, située côté fond, du récipient (31) et qui collecte l'agent adsorbant/absorbant, qui se dépose à partir du mélange gaz brut - agent adsorbant/absorbant présent dans le récipient (31), et envoie une partie prédéterminée de l'agent adsorbant/absorbant collecté au dispositif (37) d'amenée de l'agent adsorbant/absorbant, et
f) un dispositif d'évacuation (59) pour l'évacuation de la partie restante de l'agent adsorbant/absorbant collecté, hors du circuit.

2. Dispositif selon la revendication 1, **caractérisé en ce que** dans le récipient (32) sont prévus des inserts mobiles (39), qui possèdent de préférence des éléments flexibles (43) créant un tourbillonnement.

3. Dispositif selon la revendication 2, **caractérisé en ce que** les éléments flexibles de tourbillonnement (43) sont agencés sous la forme de chaînes ou de câbles, qui sont disposés de préférence sur un ou plusieurs arbres (39) entraînés de manière à pouvoir tourner.

4. Dispositif selon la revendication 3, **caractérisé en ce que** les arbres (39) sont disposés perpendiculairement à l'axe longitudinal du récipient.

5. Dispositif selon l'une des revendications précédentes, **caractérisé en ce qu'**au moins respectivement une ouverture d'amenée est prévue pour le gaz brut et/ou l'agent adsorbant/absorbant.

6. Dispositif selon la revendication 5, **caractérisé en ce que** la au moins une ouverture d'amenée (33) pour le gaz brut et la au moins une ouverture pour l'agent adsorbant/absorbant ainsi qu'au moins une ouverture d'évacuation (35) pour le gaz purifié sont disposées dans des parties d'extrémité axiales du récipient (31) de telle sorte que la purification du gaz brut s'effectue selon le principe à équicourant ou à contre-courant.

7. Dispositif selon l'une des revendications précédentes, **caractérisé en ce que** le dispositif de collecte (45) est prévu, dans le cas où l'axe longitudinal du récipient (31) est vertical, sur la face frontale du récipient, du côté du fond.

8. Dispositif selon l'une des revendications 1 à 6, **caractérisé en ce que** le dispositif de collecte (45) est prévu, dans le cas où l'axe longitudinal du récipient (31) est horizontal, sur la partie, située du côté du fond, de la paroi du récipient.

9. Dispositif selon l'une des revendications précédentes, **caractérisé en ce qu'**un dispositif de convoyage (37) du dispositif de collecte (45) entraîne l'agent adsorbant/absorbant dans un puits de collecte (51), d'où la partie prédéterminée de l'agent adsorbant/absorbant du dispositif (31) d'amenée de l'agent adsorbant/absorbant peut être amenée, l'agent adsorbant/absorbant situé dans le puits de collecte étant utilisé pour maintenir la différence de pression entre le côté d'amenée du gaz et le côté d'évacuation du gaz.

10. Dispositif selon la revendication 9, **caractérisé en ce que** le convoyeur (47) du dispositif de collecte (45) s'étend sur toute la longueur de la partie, située du côté du fond, de la paroi du récipient ou sur une partie voisine du côté d'amenée du gaz.

11. Dispositif selon l'une des revendications précédentes, **caractérisé en ce qu'**on utilise comme agent adsorbant/absorbant de l'hydrate de calcium (Ca(OH)₂).

12. Dispositif selon l'une des revendications précédentes, **caractérisé en ce qu'**à la place du dispositif pour le mélange d'eau il est prévu un dispositif pour mélanger du lait de chaux fabriqué à partir de chaux vive (CaO) et d'eau.

13. Dispositif selon l'une des revendications précédentes, **caractérisé en ce que** le rapport stoéchiométrique de la partie encore active de l'agent adsorbant/absorbant à la quantité de substance à adsorber/absorber est situé dans la gamme comprise entre 1,0 et 1,5.
